Europäisches Patentamt

European Patent Office

Office européen des brevets

(11) Veröffentlichungsnummer: **0 259 681 B1**

# EUROPÄISCHE PATENTSCHRIFT

(45) Veröffentlichungstag der Patentschrift: **28.08.91**

(51) Int. Cl.⁵: **C09D 167/00**

(21) Anmeldenummer: **87112229.7**

(22) Anmeldetag: **22.08.87**

(54) **Verfahren zur Herstellung wasserverdünnbarer, phosphorsäuremodifizierter Bindemittel für Einbrennlacke.**

(30) Priorität: **01.09.86 AT 2349/86**

(43) Veröffentlichungstag der Anmeldung:
**16.03.88 Patentblatt 88/11**

(45) Bekanntmachung des Hinweises auf die Patenterteilung:
**28.08.91 Patentblatt 91/35**

(84) Benannte Vertragsstaaten:
**CH DE FR IT LI SE**

(56) Entgegenhaltungen:
**EP-A- 0 012 205**
**EP-A- 0 101 838**

**CHEMICAL ABSTRACTS, Band 96, Nr. 12, 22. März 1982, Seite 90, Zusammenfassung Nr. 87149j, Columbus, Ohio, US; & JP-A-81 139 562 (DAINIPPON TORYO CO., LTD) 31-10-1981**

**CHEMICAL ABSTRACTS, Band 99, Nr. 26, 26. Dezember 1983, Seite 97, Zusammenfassung Nr. 214238b, Columbus, Ohio, US; & JP-A-58 67 762 (DAINIPPON TORYO CO., LTD) 22-04-1983**

(73) Patentinhaber: **Vianova Kunstharz Aktiengesellschaft**

**A-8402 Werndorf(AT)**

(72) Erfinder: **Behmel, Lukas Klaus, Dr.**
**Wenisbucherstrasse 66**
**A-8044 Graz(AT)**
Erfinder: **Dworak, Gert, Dr.**
**Dr. Robert Grafstrasse 25**
**A-8010 Graz(AT)**
Erfinder: **Staritzbichler, Werner, Dr.**
**Im Hoffeld 6**
**A-8046 Graz(AT)**

**Beschreibung**

Die Erfindung betrifft ein Verfahren zur Herstellung wasserverdünnbarer, phosphorsäuremodifizierter Bindemittel für Einbrennlacke, welche insbesonders zur Formulierung korrosionsfester Einschichtlacke mit ausgezeichneten dekorativen Eigenschaften dienen können. Die erfindungsgemäßen, nach partieller oder vollständiger Salzbildung durch anorganische oder organische Basen, wasserverdünnbaren Bindemittel zeichnen sich durch eine stetige Abnahme der Viskosität beim Verdünnen mit Wasser aus, wodurch günstige anwendungstechnische Eigenschaften der formulierten Einbrennlacke erreicht werden.

Aus der AT-PS 328 587 sind Bindemittelsysteme bekannt, bei welchen die für Polymersalzlösungen charakteristischen anomalen Veränderungen der Viskosität beim Verdünnen mit Wasser durch die Kombination der Polymersalzlösung mit einer wasserunlöslichen, filmbildenden Polyhydroxylkomponente überwunden werden. Die auf dieser Basis formulierten Einbrennlacke lassen sich aufgrund dieses Viskositätsverhaltens ausgezeichnet verarbeiten und ergeben Überzüge mit einwandfreien dekorativen Eigenschaften. Im Korrosionsschutz werden jedoch nicht in allen Fällen die von den Lackverbrauchern zunehmend erhöhten Anforderungen erreicht.

Eine geringfügige Verbesserung des Korrosionsschutzes kann durch Verwendung von Phosphorsäuregruppen enthaltenden Härtungskatalysatoren erreicht werden, doch treten schon bei geringen Zugaben niedermolekularer Phosphorsäureverbindungen bzw. freier Phosphorsäure Störungen der Oberfläche, insbesonders des Glanzes der eingebrannten Lackfilme auf.

Der möglichst weitgehende Einbau von Phosphorsäuregruppen in das Bindemittel-Molekül ist für Produkte, welche mit organischen Lösemitteln verarbeitet werden, aus der Literatur bekannt. So wird bereits in der AT-PS 356 782 die Einführung von Phosphorsäuregruppen in ein Bindemittel für Einbrennlacke beschrieben, wobei eine Hydroxylgruppen enthaltende Phosphorsäureverbindung mit einem Aminoharz umgesetzt wird.

In der AT-PS 379.402 wird ein Verfahren angegeben, welches den ebenfalls weitgehenden Einbau der Phosphorsäureanteile in Polyesterharze beschreibt, wobei die Polykondensation in Lösung vorgenommen wird.

Es wurde nun gefunden, daß es möglich ist, wasserverdünnbare Bindemittel herzustellen, welche die Formulierung von Lacken gestatten, die sowohl korrosionsfeste, als auch in ihren dekorativen Eigenschaften einwandfreie Lackierungen ergeben, wenn man eine wasserunlösliche, gegebenenfalls Phosphorsäuregruppen enthaltende, filmbildende Polyhydroxylkomponente mit einer wasserlöslichen Komponente, deren salzbildende Gruppen anteilig Phosphorsäuregruppen sind, kombiniert.

Überraschenderweise konnte festgestellt werden, daß auch bei relativ hohen Phosphoranteilen in der wasserlöslichen Komponente, wie sie nach dem Verfahren der AT-PS 379 402 erhalten werden, einwandfrei verträgliche Kombinationen resultieren. Die erfindungsgemäß hergestellten, Phosphorsäuregruppen aufweisenden Produkte zeigen gegenüber analog aufgebauten, nur Carboxylgruppen aufweisenden Bindemitteln eine verbesserte Stabilität bei Lagerung bei erhöhter Temperatur. Überdies wird durch die Phosphorsäuregruppen die Vernetzung mit Vernetzungskomponenten des Aminoharztyps katalysiert.

Die vorliegende Erfindung betrifft demgemäß ein Verfahren zur Herstellung von wasserverdünnbaren, phosphorsäuremodifizierten Bindemitteln für fremdvernetzende Einbrennlacke auf der Basis von Polyesterharzen, welches dadurch gekennzeichnet ist, daß man

(A) 15 bis 80 Gew.-%, vorzugsweise 35 bis 65 Gew.-%, einer wasserunlöslichen, filmbildenden Polyhydroxylverbindung mit einer Säurezahl von weniger als 10 mg KOH/g und einer Hydroxylzahl von 50 bis 650 mg KOH/g, vorzugsweise von 80 bis 400 mg KOH/g, mit

(B) 85 bis 20 Gew.-%, vorzugsweise 65 bis 35 Gew.-%, einer gegebenenfalls durch zumindest teilweise Neutralisation der vorliegenden säurefunktionellen Gruppen wasserlöslich gemachten Polyesterkomponente mit einer Säurezahl von 20 bis 150 mg KOH/g, vorzugsweise 35 bis 120 mg KOH/g, die mindestens 0,1 Mol, vorzugsweise 0,2 bis 2,0 Mol, Phosphor pro 1000 g der Komponente in Form esterartig gebundener Phosphorsäuren, enthält, wobei der im nichtneutralisierten Zustand mit Wasser nicht extrahierbare molare Anteil an Phosphor mindestens 50 %, vorzugsweise mindestens 70 %, beträgt und/oder der Umsatz (p) bei der Veresterung sämtlicher Säuregruppen 50 %, vorzugsweise 70 %, überschreitet,

mischt und, vorzugsweise nach partieller Kondensation der Komponenten und Zusatz einer Vernetzungskomponente, die so erhaltene Harzkombination durch partielle Neutralisation der säurefunktionellen Gruppen in eine wasserverdünnbare Form überführt.

Die Erfindung betrifft weiters die Verwendung der aus den Komponenten (A) und (B) erhaltenen Bindemittel in Kombination mit einer Vernetzungskomponente aus der Gruppe der Aminoharze oder Phenolharze oder blockierten Polyisocyanate oder Epoxidharze für die Formulierung von Einbrennlacken.

Als Komponente (A) werden erfindungsgemäß wasserunlösliche, filmbildende Polyhydroxylverbindungen eingesetzt, welche eine Säurezahl von weniger als 10 mg KOH/g und eine Hydroxylzahl von 50 bis 650, vorzugsweise 80 bis 400 mg KOH/g aufweisen. Sie sind im wesentlichen Polykondensationsprodukte, wie sie in bekannter Weise aus Polyolen, Polycarbonsäuren sowie gegebenenfalls Monocarbonsäuren oder Diisocyanaten erhalten werden. Die dafür eingesetzten Rohstoffe und die Herstellungsverfahren sind aus der Literatur, z. B. dem Buch "Makromoleküle" von ELIAS, Verlag HÜTHIG + WEPF, Basel-Heidelberg 1971, bekannt.

Gegebenenfalls kann die Komponente (A) auch Phosphorsäureeinheiten enthalten, doch ist auch in diesem Fall auf deren weitestgehende chemische Bindung zu achten. Überdies darf diese Komponente auch nach Zusatz von Basen nicht in Wasser löslich sein.

Die Komponente (B), welche in den erfindungsgemäßen Bindemittelkombinationen als makromolekularer Emulgator wirkt, stellt nach Vernetzung einen integrierenden Bestandteil des Lackfilms dar. Sie ist für sich durch partielle Neutralisation ihrer Säuregruppen, welche in einem Ausmaß entsprechend einer Säurezahl von 20 bis 150, vorzugsweise 35 bis 120 mg KOH/g vorliegen, wasserlöslich.

Als "wasserlöslich" werden im Rahmen dieser Erfindung alle Bindemittel oder Bindemittelkombinationen bezeichnet, welche ihre Verdünnbarkeit mit Wasser einer Salzbildung zwischen den Säuregruppen des Harzes und Basen verdanken. Die moleculardispersen Systeme können dabei in Wasser sowohl klar löslich sein oder opak bis trüb vorliegen.

Die säurefunktionellen Gruppen sind anteilweise Phosphorsäuregruppen, wobei die Komponente (B) einen Anteil an esterartig gebundenen Phosphorsäuren aufweist, welcher mindestens 0,1, vorzugsweise 0,2 bis 2,0 Mol Phosphor pro 1000 g der Komponente entspricht. Die eingesetzten Phosphorsäuren müssen soweit in den Molekülverband eingebaut sein, daß der im nichtneutralisierten Zustand mit Wasser nicht extrahierbare molare Anteil an Phosphor mindestens 50 %, vorzugsweise mindestens 70 % beträgt und/oder der Umsatz (p) bei der Veresterung sämtlicher Säuregruppen 50 %, vorzugsweise 70 % überschreitet.

Die Formulierung der Ansätze erfolgt nach den gleichen allgemeinen Prinzipien, wie sie dem Fachmann für die Herstellung phosphorsäurefreier Polyester bekannt sind (siehe ELIAS a.a.O.). Sie werden bevorzugt durch Polyveresterung der bei der Polyesterherstellung üblichen Rohstoffe wie Polyole, Polycarbonsäuren und gegebenenfalls Monocarbonsäuren in Gegenwart von Phosphorsäureestern und/oder Phosphorsäuren hergestellt.

Die weitgehende Bindung der Phosphorsäuren ist von wesentlicher Bedeutung, da niedermolekulare, wasserlösliche Phosphorsäureverbindungen keine Emulgierwirkung besitzen und außerdem in pigmentierten Einbrennlacken zu Störungen, wie Glanzverlust und Elastizitätseinbußen, führen. Es ist daher empfehlenswert, die Harze nach dem Verfahren gemäß AT-PS 379 402 herzustellen, welches eine weitgehende Bindung der Phosphorsäuren in Polyesterharzen gewährleistet.

Zur Einführung der Phosphorsäuregruppen dienen bevorzugt Polyphosphorsäuren, z. B. der allgemeinen Formel $H_{n+2}P_nO_{3n+1}$ mit 3 oder mehr Phosphoratomen im Molekül und P-O-P-Bindungen. Diese Säuren liegen üblicherweise in technisch anfallenden Mischungen mit einem $P_4O_{10}$-Gehalt zwischen etwa 70 und 90 % vor. Aus Gründen der Verträglichkeit werden bevorzugt die handelsüblichen Gemische aus Mono-und Diestern, wie sie durch Umsetzung von Polyphosphorsäure (84 % $P_2O_5$) oder Phosphorpentoxid mit ein-oder mehrwertigen Alkoholen erhalten werden, eingesetzt. Diese Estergemische enthalten fallweise Anteile freier Phosphorsäuren. Estergemische dieser Art können auch in situ bei der Herstellung der Komponente (B) durch Alkoholyse von Polyphosphorsäuren erhalten werden.

Die Kombination der Komponenten erfolgt durch Mischen in den im Anspruch angegebenen Verhältnissen. Die Komponenten (A) und (B) werden jedoch vorzugsweise nichtneutralisiert oder im neutralisierten Zustand einer partiellen Kondensation unterworfen, wobei selbstverständlich die Wasserverdünnbarkeit nach Neutralistion der Kombination nicht wesentlich verschlechtert werden darf.

Zur Überführung der Harze in ihre wasserlösliche Salzform werden die Säuregruppen partiell mit anorganischen oder organischen Basen neutralisiert. Vorzugsweise werden dabei organische Stickstoffbasen wie sek. oder tert. aliphatische Amine oder Alkanolamine eingesetzt. Beispiele dafür sind Triethylamin, Diethylamin, N,N-Dimethylethanolamin, Diethanolamin u. a.

Für die Formulierung der Einbrennlacke können die Bindemittel auch organische Hilfslösemittel enthalten, doch soll deren Anteil möglichst niedrig gehalten werden. Bevorzugt werden dabei Alkohole und Glykolmonooder Glykoldiether eingesetzt.

Die Vernetzung der erfindungsgemäß hergestellten Überzugsmittel erfolgt bei erhöhter Temperatur in Gegenwart der für Einbrennlacke üblichen Vernetzungsmittel. Vorteilhafterweise sollen die Vernetzungsmittel zumindestens eine beschränkte Toleranz gegenüber Wasser aufweisen, um den Anteil an Hilfslösemitteln niedrig zu halten.

Als Vernetzungsmittel können die handelsüblichen Aminoharze, d. h. Kondensationsprodukte von Formaldehyd mit Harnstoff, Melamin, Benzoguanamin etc., welche in den meisten Fällen mit Alkoholen verethert sind, verwendet werden. Ebenso können auch Phenol-Aldehyd-Kondensate, blockierte Polyisocyanate oder Epoxidharze eingesetzt werden. Die Auswahlkriterien für die geeigneten Produkte sind dem Fachmann bekannt.

Aufgrund ihrer gegenüber dem Stand der Technik verbesserten Korrosionsfestigkeit eignen sich die Produkte gemäß der vorliegenden Erfindung besonders für industrielle Einschichtlackierungen, von welchen überdies auch einwandfreie dekorative Eigenschaften wie Glanz, Verlauf und Wetterfestigkeit, aber auch hohe Elastizität, verlangt werden. Selbstverständlich ist auch die Formulierung von Grundierungen, Füllern und Decklacken aus diesen Produkten möglich.

Die Überzugsmittel können in nichtpigmentierter oder in pigmentierter Form aufgebracht werden. Die Auswahl der bei der Formulierung der Lacke eingesetzten Pigmente, Füllstoffe, Additive und Hilfslösemittel ist dem Fachmann bekannt und bedarf keiner weiteren Erläuterungen.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

1. Herstellung der wasserunlöslichen Polyhydroxylkomponenten (PH - Komponenten)

PH-Komponente A und B: Die Komponenten können in den üblichen Kunstharzanlagen (siehe z. B. WINNACKER-KÜCHLER, Chemische Technologie, C. Hanser-Verlag, München 1972) unter Verwendung von Toluol als Schleppmittel nach dem Azeotropverfahren hergestellt werden.

| ANSATZ (Tle) | | |
|---|---|---|
| Hexandiol-1,6 | 37 | -- |
| Cyclohexandimethanol | 14,5 | -- |
| Pentaerythrit | 4,5 | 136 |
| Tallölfettsäure | -- | 168 |
| Dehydratisierte Rizinusölfettsäure | 5,5 | -- |
| Isononansäure | 1,0 | 32 |
| Isophthalsäure | 12,5 | 126 |
| Trimellithsäureanhydrid | 25,5 | -- |
| REAKTIONSTEMPERATUR, °C, ± 5°C | 205 | 230 |
| SÄUREZAHL mg KOH/g | 4 | 4 |
| GRENZVISKOSITÄTSZAHL, ml/g, DMF/20°C | 10,3 | 10,3 |
| AUSLAUFZEIT DIN 53211, 20°C in Butylglykol, Sekunden | 90 | 100 |
| Hydroxylzahl DIN 53240, mg KOH/g | 219 | 223 |

2. Herstellung der Phosphorsäuregruppen enthaltenden Polyesterkomponenten

Die erfindungsgemäß eingesetzten Phosphorsäurepolyester (PP-Komponenten) werden gemäß den folgenden Angaben in einer wie unter 1. beschriebenen Kunstharzanlage hergestellt.

PP-Komponente 1: 11 Tle Trimethylolpropan (TMP), 60 Tle Neopentylglykol (NPG), 10 Tle Adipinsäure (ADI) und 48 Tle Tetrahydrophthalsäure anhydrid (THPSA) werden aufgeschmolzen und bei 120 bis 140°C mit 18 Tlen Phosphorsäure (PS 84 ) (84 % $P_4O_{10}$-Gehalt) versetzt. Die Temperatur wird auf 200°C gesteigert und der Ansatz unter azeotroper Destillation bis zu einer Säurezahl von 100 mg KOH/g und einer Grenzviskositätszahl von 9,2 ml/g verestert. Nach Erreichen der Endwerte wird mit Diethylenglykoldimethylether (DGDM) auf einen Festkörpergehalt von 85 % verdünnt.

Cp,m / Cp,ges. = 71 % (nicht extrahierbarer Anteil)

p = 83 % (Veresterungsumsatz)

PP-Komponente 2 - 5: In analoger Weise wie bei PP 1 dargestellt, werden weitere PP-Komponenten gemäß folgenden Angaben hergestellt.

|  | | PP | 2 | 3 | 4 | 5 | PC(3) |
|---|---|---|---|---|---|---|---|
| ANSATZ, | Tle | | | | | | |
|  | TMP | 11 | 11 | 11 | 35 | 40 | |
|  | NPG | 60 | 71 | 59 | 62 | 38 | |
|  | ADI | 10 | 10 | 13 | -- | 10 | |
|  | CON 50 (1) | -- | -- | -- | 50 | -- | |
|  | THPSA | 36 | 72 | 84 | -- | 113 | |
|  | PSA (2) | -- | -- | -- | 109 | -- | |
|  | PS 84 | 18 | 13,5 | 3 | 9 | -- | |
| Phosphorsäure MOL/ Kg | | 1,80 | 0,99 | 0,22 | 0,43 | -- | |
| Säurezahl mg KOH/g | | 87,3 | 72,2 | 85,6 | 83 | 99,3 | |
| Grenzviskositäts- zahl    ml/g | | 9,2 | 7,2 | 8,0 | 4,6 | 7,4 | |
| $C_{p,m}/C_{p,ges}$, (%) | | 74 | 67 | 52 | 36 | -- | |
| p, % | | 85 | 87 | 83 | 80 | 79 | |

(1) technische konjugierte Linolsäure

(2) o-Phthalsäureanhydrid

(3)  Polycarboxylkomponente  (Vergleichsbeispiel)

Erfindungsgemäße Beispiele 1 - 5:

Gemäß den in der nachfolgenden Tabelle gemachten Angaben werden die Komponenten kombiniert.

| BEISPIEL | 1 | 2 | 3 | 4 | 5 | VB[1] |
|---|---|---|---|---|---|---|
| ANSATZ (Tle Festharz) | | | | | | |
| PP - 1 | — | 88 | — | — | — | — |
| PP - 2 | — | — | 50 | — | — | — |
| PP - 3 | 89 | — | — | — | — | — |
| PP - 4 | — | — | — | 50 | — | — |
| PP - 5 | — | — | — | — | 40 | — |
| PC | — | — | — | — | — | 50 |
| PH - A | 89 | 88 | 50 | 50 | — | 50 |
| PH - B | — | — | — | — | 60 | — |
| DGDM | 15 | 15 | 9 | 9 | 7 | — |
| Kondensation (1) Temperatur, °C | 120 | 110–120 | 110–120 | 110–120 | 110–120 | 110–120 |
| Grenzviskositätszahl ml/g DMF/20°C | 12,3 | 15 | 15 | 8 | 7,5 | 11,0 |
| Verdünnen und Neutralisation Temperatur,°C | 85 | 85 | 85 | 85 | 85 | 85 |
| Wasser, Tle | 391 | 300 | 169 | — | — | 108 |
| Lösemittel, Tle | — | — | — | 39BUGL | 41BUGL | 14DGMD |
| Dimethylethanolamin, Tle | 10 | 14 | 8,4 | 5,5 | 5,6 | 6 |
| Festkörpergehalt, % | 30 | 35 | 35 | 65 | 65 | 43 |
| pH-Wert (10%ig) | 8,0 | 8,1 | 8,2 | 8,2 | 8,1 | 8,6 |

DGMD Diethylenglykoldimethylether
BUGL Monoethylenglykolmonobutylether
VB[1] Vergleichsbeispiel
(1) Die Kondensation wird so lange geführt, bis eine
5%ige Lösung des Reaktionsgutes in Wasser nach
Neutralisation mit Dimethylethanolamin klar bis
opak ist.

Beispielhaft für die typische und vorteilhafte lacktechnische Anwendung der erfindungsgemäßen Kunstharze als Bindemittel für korrosionsfeste Einschicht- und Decklacke wird ein Weißlack angegeben.

Lackbeispiel A:
(Beispiel mit erfindungsgemäßem Kunstharz)

Aus 128 Tlen Harz aus Beispiel 2 / 35%ig, 33 Tlen Wasser deionisiert, 100 Tlen Titandioxidpigment vom Rutiltyp, sowie einer dem Fachmann bekannten Menge an geeigneten Glasperlen oder Reibsand wird eine Perlmühlenpaste hergestellt und 20 Minuten dispergiert.
Die dispergierte Paste wird mit 114 Tlen Harz aus Beispiel 2 / 35%ig, 15 Tlen eines 98 - 100%igen Melaminharzes vom Hexamethoxymethylmelamintyp, 6 Tlen Wasser, 1 Tl eines handelsüblichen Verlauf- und Antikratermittels (z. B. Additol XL 204) sowie 3 Tlen Diethanolamin auf einen Festkörper von ca. 50 % eingestellt.

Die Auslaufzeit nach DIN 53211/20°C beträgt ca. 100 Sekunden, der pH-Wert (Glaselektrode) liegt bei ca. 8.5.

Für die Applikation mit der Luftspritzpistole wird der Lack mit deionisiertem Wasser auf ca. 30 Sekunden nach DW 53211/20°C verdünnt, wonach ein Festkörper von ca. 48 % vorliegt.

Lackbeispiel B:
(Vergleichsbeispiel)

In gleicher Weise wie bei Lackbeispiel A wird aus 104.2 Tlen Harz 43 %ig aus Vergleichsbeispiel VB, 52,5 Tlen Wasser deionisiert und 100 Tlen Titandioxidpigment vom Rutiltyp eine Perlmühlenpaste hergestellt und 20 Minuten dispergiert.

Die dispergierte Paste wird mit 92,8 Tlen Harz 43 %ig aus Vergleichsbeispiel VB, 15 Tlen eines 98 - 100 %igen Melaminharzes vom Hexamethoxymethylmelamintyp, 31,2 Tlen Wasser, 1 Tl eines handelsüblichen Verlauf- und Antikratermittels (z. B. Additol XL 204) sowie 3 Tlen Diethanolamin auf einen Festkörper von ca. 50 % eingestellt.

Die Auslaufzeit nach DIN 53211/20°C beträgt ca. 30 Sekunden, der pH-Wert (Glaselektrode) liegt bei ca. 8.9.

Die Lackfilmeigenschaften sind in nachstehender Tabelle angeführt.

Tabelle: Wichtige Lackfilmeigenschaften 1)

| Prüfgröße | Lackbeispiel A Einbrennbeding. 20 min.140°C/20 min.160°C | | Lackbeispiel B Einbrennbeding. 20 min.140°C/20 min.160°C | |
|---|---|---|---|---|
| Pendelhärte nach König (Sekunden) | 130 | 160 | 10 – 20 | 150 |
| Erichsen- tiefung (mm) | 8 – 9 | 6 – 7 | 9 | 6 – 7 |
| Salzsprüh- test 2) ASTM B 117/64 mm-Gesamt- ablösung | 3 – 6 | 2 – 4 | > 20 | 8 – 12 |

1) Trockenfilmschichtstärke 30 µm

2) Prüfzeit 144 Stunden, Substrat : Blankblech

Prüfung auf Stabilität von 30%igen wäßrigen Verdünnungen:
Verdünnung des Bindemittels aus Beispiel 2 ist nach 1 Woche 60°C noch in Ordnung, während nach derselben Zeit die Verdünnung aus Vergleichsbeispiel VB entmischt und zweiphasig ist.

**Patentansprüche**

1. Verfahren zur Herstellung von wasserverdünnbaren, phosphorsäuremodifizierten Bindemitteln für fremdvernetzende Einbrennlacke auf der Basis von Polyesterharzen, dadurch gekennzeichnet, daß man

(A) 15 bis 80 Gew.-%, vorzugsweise 35 bis 65 Gew.-%, einer wasserunlöslichen, filmbildenden Polyhydroxylverbindung mit einer Säurezahl von weniger als 10 mg KOH/g und einer Hydroxylzahl von 50 bis 650 mg KOH/g, vorzugsweise von 80 bis 400 mg KOH/g, mit
(B) 85 bis 20 Gew.-%, vorzugsweise 65 bis 35 Gew.-%, einer gegebenenfalls durch zumindest teilweise Neutralisation der vorliegenden säurefunktionellen Gruppen wasserlöslich gemachten Polyesterkomponente mit einer Säurezahl von 20 bis 150 mg KOH/g, vorzugsweise 35 bis 120 mg KOH/g, die mindestens 0,1 Mol, vorzugsweise 0,2 bis 2,0 Mol, Phosphor pro 1000 g der Komponente in Form esterartig gebundener Phosphorsäuren enthält, wobei der im nichtneutralisierten Zustand mit Wasser nicht extrahierbare molare Anteil an Phosphor mindestens 50 %, vorzugsweise mindestens 70 %, beträgt und/oder der Umsatz (p) bei der Veresterung sämtlicher Säuregruppen 50 %, vorzugsweise 70 %, überschreitet,

mischt und, vorzugsweise nach partieller Kondensation der Komponenten und Zusatz einer Vernetzungskomponente, die so erhaltene Harzkombination durch partielle Neutralisation der säurefunktionellen Gruppen in eine wasserverdünnbare Form überführt.

2. Verfahren nach Anspruch 1, dadurch gekennzeichnet, daß man als Komponente (A) eine Polyhydroxylverbindung einsetzt, die chemisch weitestgehend gebundene Phosphorsäureeinheiten enthält.

3. Verwendung der nach den Ansprüchen 1 und 2 hergestellten Bindemittel, welche eine Vernetzungskomponente aus der Gruppe der Aminoharze oder Phenolharze oder blockierten Polyisocyanate oder Epoxidharze enthalten, für die Formulierung von Einbrennlacken.

## Claims

1. Process for the preparation of water-dilutable binders modified with phosphoric acid for non-selfcrosslinking stoving enamels based on polyester resins, characterised in that
(A) 15 to 80% by weight, preferably 35 to 65% by weight, of a water-insoluble, film-forming polyhydroxyl compound having an acid number of less 10 mg of KOH/g and a hydroxyl number of 50 to 650 mg of KOH/g, preferably 80 to 400 mg of KOH/g, are mixed with
(B) 85 to 20% by weight, preferably 65 to 35% by weight, of a polyester component which may have been made water-soluble by at least partial neutralisation of the acid-functional groups present and which has an acid number of 20 to 150 mg of KOH/g, preferably 35 to 120 mg of KOH/g, and contains at least 0.1 mol, preferably 0.2 to 2.0 mol, of phosphorus per 1000 g of the component in the form of phosphoric acids bound in the form of an ester, the molar proportion of phosphorus which cannot be extracted with water in the non-neutralised state being at least 50%, preferably at least 70%, and/or the conversion (p) of the esterification of all acid groups exceeding 50%, preferably 70%,
and the resin combination thus obtained is converted, preferably after partial condensation of the components and addition of a crosslinking component, by partial neutralisation of the acid-functional groups into a water-dilutable form.

2. Process according to Claim 1, characterised in that component (A) used is a polyhydroxyl compound which contains phosphoric acid units which are chemically bound to the largest possible extent.

3. Use of the binders prepared according to Claims 1 and 2, which binders contain a crosslinking component from the group comprising amino resins or phenolic resins or blocked polyisocyanates or epoxy resins for the formulation of stoving enamels.

## Revendications

1. Procédé de préparation de liants modifiés par l'acide phosphorique et diluables à l'eau pour laques à cuire non autoréticulantes à base de résines de polyester, caractérisé en ce que l'on mélange
(A) 15 à 80% en poids, de préférence 35 à 65% en poids, d'un composé polyhydroxylé filmogène, non hydrosoluble ayant un indice d'acide inférieur à 10 mg de KOH/g et un indice d'hydroxyle de 50 à 650 mg de KOH/g, de préférence de 80 à 400 mg de KOH/g, avec

(B) 85 à 20% en poids, de préférence 65 à 35% en poids, d'un constituant polyester éventuellement rendu hydrosoluble par neutralisation au moins partielle des groupes fonctionnels acides présents ayant un indice d'acide de 20 à 150 mg de KOH/g, de préférence de 35 à 120 mg de KOH/g, qui contient au moins 0,1 mole, de préférence 0,2 à 2,0 mole, de phosphore pour 1000 g du constituant sous forme d'acides phosphoriques liés par des liaisons ester, la fraction molaire de phosphore non extractible à l'eau à l'état non neutralisé étant d'au moins 50%, de préférence d'au moins 70%, et/ou le degré de conversion (p) lors de l'estérification de tous les groupes acides dépassant 50%, de préférence 70%, et l'on convertit la combinaison de résines ainsi obtenue en une forme diluable à l'eau par neutralisation partielle des groupes fonctionnels acides, de préférence après condensation partielle des constituants et addition d'un constituant de réticulation.

2. Procédé selon la revendication 1, caractérisé en ce que l'on utilise comme constituant (A) un composé polyhydroxylé qui contient des unités d'acide phosphorique très largement liées chimiquement.

3. Utilisation des liants préparés selon les revendications 1 et 2, qui contiennent un constituant de réticulation du groupe des résines amino ou des résines phénoliques ou des polyisocyanates bloqués ou des résines époxy, pour la formulation de laques à cuire.